# FASCICULE DE BREVET EUROPEEN

(11) **EP 3 156 515 B1**
(45) Date de publication et mention de la délivrance du brevet: **14.03.2018**
(21) Numéro de dépôt: 16192997.1
(22) Date de dépôt: 10.10.2016
(51) Int. Cl.: C23C 4/067, C23C 4/18, C23C 4/02, C23C 8/12, C23C 8/02, C23C 8/20, C22C 19/07, C22F 1/10

(54) **INTERFACE D'ADAPTATION DE FRICTION ENTRE DEUX PIÈCES EN NICKEL OU ALLIAGE DE NICKEL OU COBALT CHROME EN MOUVEMENT RELATIF L'UNE CONTRE L'AUTRE À HAUTE TEMPÉRATURE**
SCHNITTSTELLE ZUR ANPASSUNG DER REIBUNG ZWISCHEN ZWEI TEILEN AUS NICKEL ODER NICKELLEGIERUNGEN ODER KOBALTCHROM IN RELATIVER BEWEGUNG GEGENEINANDER MIT HOHER TEMPERATUR
INTERFACE FOR ADAPTING THE FRICTION BETWEEN TWO NICKEL OR NICKEL ALLOY OR CHROMATED COBALT PARTS MOVING RELATIVE TO ONE ANOTHER AT HIGH TEMPERATURE

(30) Priorité: 16.10.2015 FR 1559880
(43) Date de publication de la demande: 19.04.2017
(73) Titulaire: Airbus Operations, 31060 Toulouse (FR)
(72) Inventeur: POUPON, Cédric, 31770 COLOMIERS (FR)
(74) Mandataire: Santarelli

(56) Documents cités:
- FR-A1- 2 907 468
- US-A1- 2013 337 221
- US-A1- 2015 071 762
- DATABASE WPI Week 201318 2013 Thomson Scientific, London, GB; AN 2013-A98791 XP002758277, -& KR 2013 0003300 A (UNIV CHANGWON NAT IND&ACAD COOP) 9 janvier 2013 (2013-01-09)

## Description

La présente invention concerne une interface d'adaptation interposée entre deux pièces en nickel ou en alliage de nickel ou en alliage de cobalt chrome en mouvement relatif l'une contre l'autre. Cette interface permet de réduire l'usure surfacique des deux pièces due aux frottements entre celles-ci. La présente invention concerne également le procédé permettant de l'obtenir.

### DOMAINE TECHNIQUE

La présente invention concerne plus précisément une interface d'adaptation de friction à chaud interposée entre deux pièces en nickel ou en alliage de nickel ou en alliage de cobalt chrome en mouvement relatif l'une contre l'autre. Cette interface permet de réduire l'usure surfacique des deux pièces due aux frottements entre les deux pièces à haute température à savoir entre les températures de 300°C et 650°C sous atmosphère contenant de l'oxygène. Cette interface est particulièrement adaptée pour les pièces utilisées dans des applications requérant des propriétés tribologiques particulières.

Les alliages de nickel tel que par exemple l'inconel 718 (marque déposée) comportent des propriétés très recherchées dans l'industrie aéronautique, en raison de leur tenue mécanique à haute température et de leur résistance à l'oxydation à chaud.

Cependant les alliages de nickel présentent un très mauvais comportement en frottement, associé à une tendance marquée au grippage, et une forte sensibilité à l'effet de rayure, et leur utilisation est particulièrement limitée pour des applications requérant des propriétés tribologiques particulières à haute température.

Dans l'industrie aéronautique, les liaisons d'articulation qui fonctionnent à chaud entre les composants moteur et mat sont assurées par un assemblage constitué de rotule, d'axe et de bagues. Les pièces constituant ce système peuvent être réalisées par des alliages de nickel comme l'inconel 718.

Ce système à rotule comporte généralement une pièce concave et une pièce sphérique portée par un axe. La partie sphérique venant se loger dans la partie concave est animée d'un mouvement de rotation dans toutes les directions ; la surface de la partie sphérique et la surface de la partie concave sont en frottement permanent l'une contre l'autre.

On distingue principalement dans le cas du système à rotule et dans d'autres systèmes similaires deux types d'usure par frottements, une usure par un frottement de très faible amplitude qui est généralement de l'ordre de quelques micromètres à quelques dixième de millimètres, nommé également fretting-usure ou encore vibratoire sous charge et de manière additionnelle une usure par glissement dont l'amplitude de mouvement atteint plusieurs dizaine de millimètres. L'usure par frottements se développe à partir des fines aspérités présentes sur les surfaces frottantes en contact et qui tendent à se souder mutuellement. Lorsque la charge appliquée localement est élevée et dans le cas où les matériaux des surfaces frottantes sont de compositions similaires, les frottements provoquent des usures surfaciques et des dégradations pouvant aller jusqu'au grippage de l'axe ou de la rotule. Ces phénomènes d'usure sont d'autant plus élevés lorsque ces pièces sont réalisées en alliage de nickel. De plus, la température élevée de l'environnement (entre 300°C et 650°C) favorise l'apparition d'usure adhésive responsable in fine des cas de grippage.

Il est donc souhaitable d'effectuer un traitement de surface des pièces en nickel ou alliage de nickel ou alliage de cobalt chrome pour les systèmes sujets à des frottements permanents.

### TECHNIQUE ANTERIEURE

Le présent demandeur a déposé un brevet le 20 octobre 2006 dont le numéro de publication est FR2907468 portant sur une interface d'adaptation à basse température. Dans ce brevet, il est décrit un revêtement à base de WC-C :H obtenu par un procédé de dépôt physique en phase vapeur (en anglais PVD (Physical Vapour Deposition)) associé à un revêtement d'alliage de cuivre obtenu par projection thermique. Ce revêtement donne satisfaction à température inférieure à 250°C. En revanche, ces couples de matériaux d'interface peuvent se révéler moins efficaces voire inefficaces au-dessus d'une certaine température car le cuivre se transforme en monoxyde de cuivre et le WC-C:H graphitise : de ce fait, l'articulation s'use rapidement et ce type d'interface conduit à un rapide grippage pour des très hautes températures entre 400°C et 650°C. Le document KR 2013 / 0003300 A décrit une pièce en Inconel revêtue d'une couche d'adaptation formée par pulvérisation thermique et ayant la composition suivante: Co-28.4%Mo-17.6%Cr-3.10%Si.

Aussi, la présente invention propose une interface d'adaptation entre deux surfaces frottantes en nickel ou alliage de nickel ou alliage de cobalt chrome, particulièrement adaptée à des pièces de type rotule, axe, bagues ..., destinée à traiter aisément et de façon uniforme les pièces en nickel ou en alliage de nickel ou en alliage de cobalt chrome quelles que soient la géométrie et la forme des pièces, et permettant de réduire de manière significative l'usure adhésive par frottement pour des températures de fonctionnement dites hautes, à savoir comprise entre 300°C et 650°C en utilisant judicieusement les matériaux tribo-compatibles tout en étant adapté en terme de dureté par rapport aux matériaux des pièces afin d'améliorer et d'entretenir les propriétés de glissement et de permettre un démontage à la main après fonctionnement.

### EXPOSE DE l'INVENTION

Pour ce faire, la présente invention propose une interface d'adaptation interposée entre une première pièce en nickel ou en alliage de nickel ou en alliage de cobalt chrome en mouvement relatif avec une deuxième pièce en nickel ou en alliage de nickel ou en alliage de cobalt chrome, caractérisée en ce que ladite interface comporte deux couches d'adaptation,
- une première couche d'adaptation est déposée sur une des deux pièces et présente une constitution permettant avec le frottement avec l'autre pièce de créer une couche de type glaze layer ;
- une deuxième couche d'adaptation est déposée sur la deuxième pièce à des fins de coopération avec la première couche en permettant d'agir comme catalyseur de l'oxyde formé par friction avec la première couche.

La première couche de glaze layer de l'interface améliore le glissement des pièces en frottement. La fonction de catalyseur apportée par la deuxième couche permet de stabiliser l'oxyde formé par friction et d'assurer ainsi une fonction de lubrification sur un domaine étendu de haute température. Une couche de « glaze layer » désigne de manière connue, dans le domaine des matériaux, une couche protectrice d'oxyde. Cette couche est formée lorsque deux métaux sont glissés l'un contre l'autre à haute température.

L'interface peut présenter au moins l'une des caractéristiques optionnelles suivantes, prises isolément ou en combinaison.

Ladite première couche d'adaptation est une couche d'alliage de cobalt dont la teneur en cobalt est d'au moins 40%.

Ladite première couche d'adaptation est un alliage de cobalt, chrome molybdène et silicium.

La teneur en cobalt est de 51%±1%, la teneur en molybdène de 28%±1%, la teneur en chrome de 17%±1% et la teneur en silicium de 4%±1% dans l'alliage de cobalt, chrome, molybdène et silicium de la couche d'adaptation.

Ladite première couche est pré-oxydée à température minimum de 525 °C et maximum de 650°C avant d'être soumise à la friction.

Ladite première couche possède une dureté inférieure à celle de ladite première pièce, ladite première couche comportant une morphologie microporeuse, conférant à ladite première couche une fonction d'adaptation de propriétés élasto-plastique par un mécanisme de compaction des porosités.

Ladite première couche a une densité globale de micropores comprise entre 2% et 30%.

Ladite première couche a une épaisseur comprise entre 50µm et 200µm après rectification.

Ladite première couche a une capacité à déformation élastique de 80 GPa en module de Young.

La deuxième couche d'adaptation est réalisée par traitement thermochimique de diffusion de carbone en surface de la pièce.

La surface traitée est en inconel 718.

Ladite deuxième couche d'adaptation comporte une dureté superficielle supérieure à 850 HV.

Ladite deuxième couche d'adaptation a une profondeur de diffusion (épaisseur de traitement) de 10 à 15 µm et une dureté supérieure à 800 HV sur les 5 premiers µm dans la profondeur du matériau.

La présente invention concerne également le procédé de dépôt de la première couche d'adaptation sur ladite pièce en nickel ou en alliage de nickel ou alliage de cobalt chrome. Le procédé de dépôt est un procédé de dépôt de revêtement par projection thermique comprenant les étapes suivantes :
- la surface de la pièce est soumise à un prétraitement de telle sorte que l'adhérence entre la pièce et la première couche d'adaptation résiste à un effort de traction au moins égal à 35 Mpa,
- la couche de dépôt est formée à partir d'une succession de passages de projections de particules métalliques à l'état fondu sur la surface de la pièce, ladite couche étant un empilement de lamelles, chaque lamelle ayant une épaisseur minimale de 15µm.

Une rectification du revêtement est réalisée pour obtenir la cote finale.

Une oxydation post-projection est réalisée à température de 525°C pendant 22 heures sous atmosphère composée d'oxygène.

La première couche présente une dureté moyenne comprise entre 400 Hv et 500 Hv.

La présente invention concerne également un procédé de dépôt de la deuxième couche d'adaptation sur la pièce en nickel ou en alliage de nickel ou alliage de cobalt chrome. Le procédé de dépôt est composé d'un procédé de traitement thermochimique de diffusion de carbone en surface de ladite pièce.

La présente invention concerne également un dispositif d'articulation comprenant ladite interface d'adaptation, ladite interface étant interposée entre une première pièce de petite longueur cinématique et une deuxième pièce de grande longueur cinématique constituant le dispositif, la première couche d'adaptation de l'interface étant appliquée sur la petite longueur cinématique et la deuxième couche d'adaptation de l'interface étant appliquée sur la grande longueur cinématique.

### DESCRIPTION SOMMAIRE DES DESSINS

D'autres buts, avantages et caractéristiques de l'invention apparaîtront à la lecture de la description qui va suivre de l'interface selon l'invention, donné à titre d'exemple non limitatif en référence aux dessins ci-annexés dans lesquels :
- la figure 1 représente schématiquement deux pièces en mouvement relatif l'une par rapport à l'autre ;
- la figure 2 représente schématiquement un mode de réalisation d'interface d'adaptation interposée entre deux pièces ;
- la figure 3 représente des courbes de profondeurs d'usure et de coefficient de frottement en fonction du temps pour différents types de matériaux utilisés pour l'interface ;
- la figure 4 est une série de photos montrant les endommagements de surface en fin d'essai d'usure pour différents types de matériaux utilisés pour l'interface.

### MANIERE DE REALISER L'INVENTION

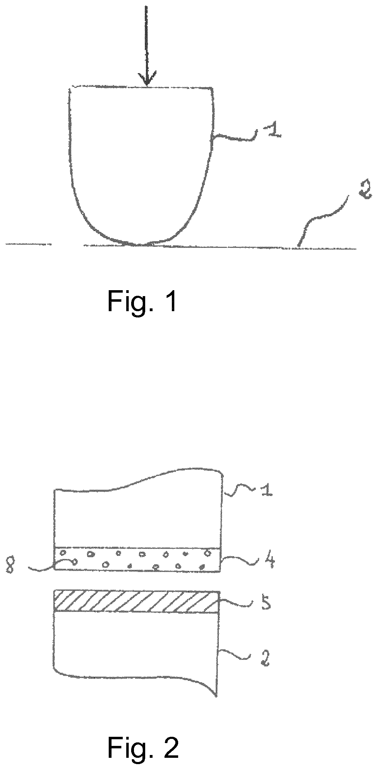

La figure 1 représente schématiquement deux pièces 1, 2 en mouvement relatif l'une contre l'autre. L'amplitude du mouvement peut varier entre quelques millimètres et quelques dizaines de millimètres. La configuration cinématique est similaire à celle d'un système mécanique de type rotule. De manière générale, on distingue une première pièce ayant une petite longueur cinématique 1 et une deuxième pièce ayant une grande longueur cinématique 2. La petite longueur cinématique est définie par des points situés toujours dans la surface de contact et la grande longueur cinématique par des points situés périodiquement dans la surface de contact.

Pour la suite de la description la pièce de petite longueur cinématique 1 et la pièce de grande longueur cinématique 2 sont nommées respectivement pion 1 et piste 2. La charge d'application est appliquée selon la direction du pion vers la piste telle que représentée sur la figure 1 par une flèche. La courbure de la surface de contact du pion 1 contre la piste 2 varie en fonction de la pression de la charge appliquée.

Selon l'invention, afin d'augmenter la résistance aux frottements de ces pièces réalisées en nickel ou en alliage de nickel ou en alliage de cobalt chrome et d'améliorer les propriétés de glissement, on interpose une interface de traitement entre les deux pièces en mouvement relatif l'une contre l'autre. Cette interface est avantageusement une interface d'adaptation de friction pour les deux pièces.

La figure 2 présente schématiquement une première forme de réalisation de l'interface d'adaptation. Le pion 1, la piste 2 et l'interface d'adaptation interposée entre le pion et la piste sont modélisés par un empilement de couches.

L'interface comporte deux couches d'adaptation dont une première couche d'adaptation 4 est déposée sur le pion 1 et une deuxième couche d'adaptation 5 coopérant en terme de propriétés tribologiques avec la première couche d'adaptation est déposée sur la piste 2.

Avantageusement comme il sera vu dans la suite de la description, la couche 4 et la couche 5 possèdent des propriétés complémentaires de manière d'une part à avoir une adaptation en terme de dureté entre le pion 1 et la piste 2 et d'autre part une amélioration en terme de glissement en exerçant une fonction de lubrifiants.

Pour cela, la première couche d'adaptation 4 comporte une morphologie microporeuse. Les micropores 8 présents au sein de la couche 4 permettent de piéger la graisse d'un lubrifiant liquide. La libération de cette graisse pendant les frottements entre le pion 1 et la piste 2 permet à la première couche 4 d'exercer une fonction d'adaptation de lubrification.

Par ailleurs, la dureté de cette première couche 4 est comprise entre celle du pion 1 et celle de la deuxième couche d'adaptation 5 afin d'obtenir un gradient de dureté à l'interface pion/première couche et à l'interface première couche/deuxième couche. Ce gradient de dureté permet de limiter les efforts de frottements et de réduire par conséquent l'usure due aux frottements.

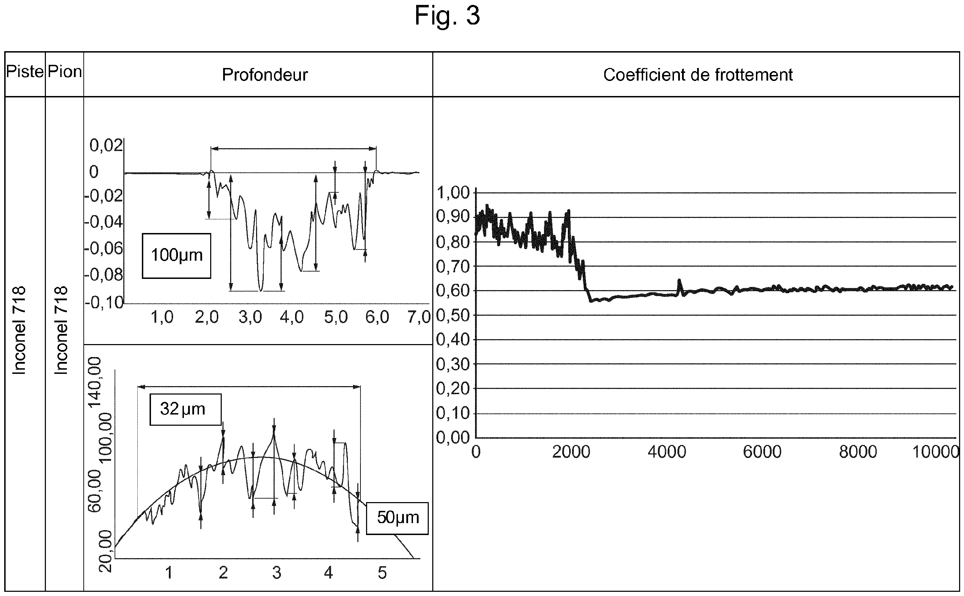

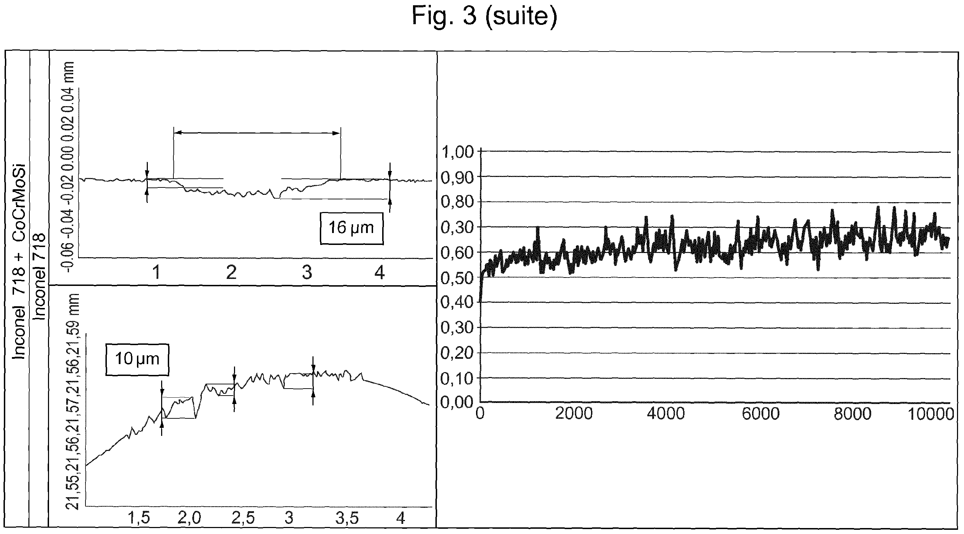

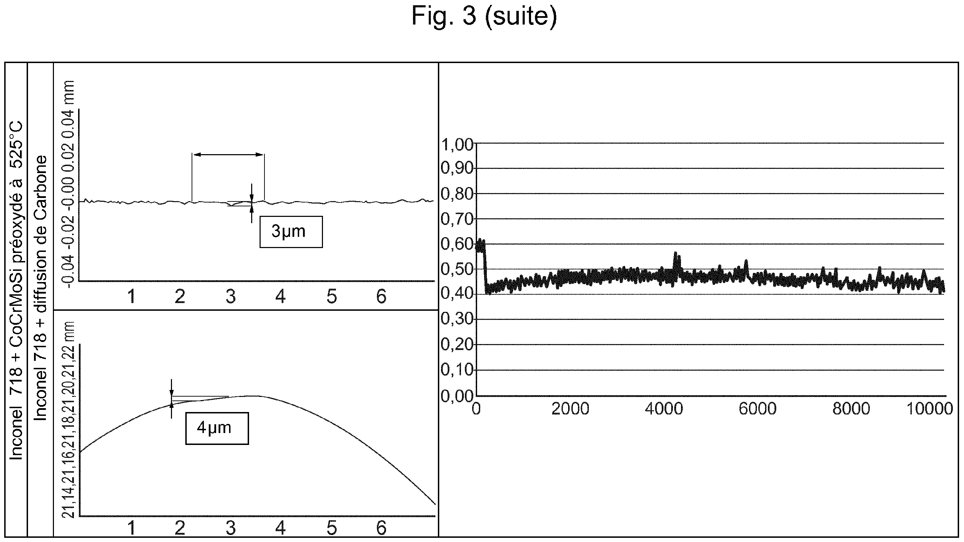

A des fins de comparaison, la figure 3 représente les courbes caractéristiques des comportements de surfaces de deux pièces en frottement l'une contre l'autre. Les essais d'usure par glissement sont réalisés avec un tribomètre alternatif linéaire. Les conditions d'essai sont les mêmes pour les trois essais :
- Pression de contact = 250 MPa
- Amplitude du mouvement = +/- 3 mm
- Fréquence = 1 Hz
- Température = 450 °C
- Nombre de cycle =10 000 cycles

En revanche, les matériaux des couches d'adaptation de l'interface diffèrent d'un essai à l'autre et sont respectivement :
- de l'inconel 718 pour les deux couches ;
- de l'inconel 718 revêtu de CoCrMoSi pour l'une et de l'inconel 718 pour l'autre;
- de l'inconel 718 revêtu de CocrMoSi et préoxydé à 525°pour l'une et de l'inconel 718 ayant subi un traitement de diffusion de carbone pour l'autre.

Sur la figure 3, la première colonne spécifie le matériau de la couche de l'interface de la première pièce 1 en l'occurrence du pion 1, la deuxième colonne celui de la deuxième pièce 2, à savoir la piste 2. La troisième colonne représente la profondeur des zones usées avec le temps. La quatrième colonne représente l'évolution du coefficient de frottement avec le nombre de cycles parcourus.

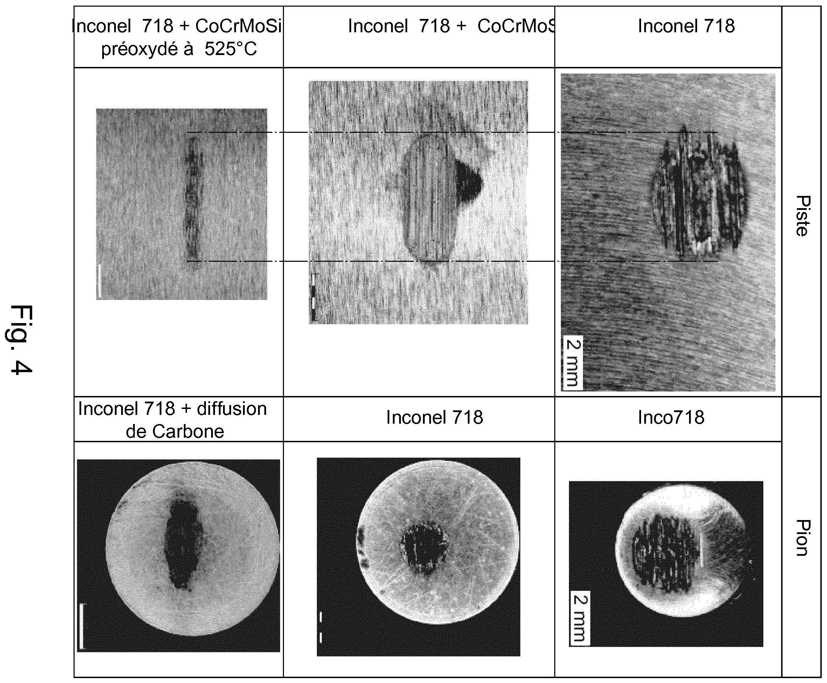

La figure 4 représente le résultat de ces trois essais au travers d'une photo de la surface respective de chacune des deux couches après essai.

Dans le cas de deux couches en inconel 718 qui fait l'objet du premier essai, il se forme sous l'action du frottement entre 500°C et 650°C une couche protectrice d'oxyde mixte de nickel, appelée oxyde glaze layer ou glaze layer dans ce qui suit. La couche d'oxyde ainsi formée protège les matériaux contre l'usure. Cependant, la stabilisation de cet oxyde peut prendre une à deux heures, durée pendant laquelle l'interface fait l'objet d'endommagements caractéristiques du grippage : microsoudures et rayures profondes. Cette phase de stabilisation est visible sur les courbes de la figure 3. Le coefficient de frottement est pendant la phase précédant la phase de stabilisation supérieure à 0.6. La figure 4 montre l'état de surface et la profondeur des rayures qui se forment pendant cette phase instable. Après une durée de frottement en température suffisamment prolongée (supérieure à une heure), l'oxyde stable se forme et permet d'obtenir un coefficient de frottement stable à la valeur d'environ 0,6, le mécanisme d'usure s'arrête mais l'endommagement initial perdure. En condition de frottement à température 450°C, le grippage est prépondérant et l'interface ne permet plus d'assurer un glissement normal.

Les deux autres essais représentent les résultats qui se trouvent être améliorés à l'aide de l'interface décrite ci-après.

L'interface comporte deux couches d'adaptation :
- une première couche 4 d'adaptation est déposée sur une des deux pièces et par exemple la première pièce 1 et présente une constitution permettant avec le frottement avec l'autre pièce de créer une couche de type glaze layer ;
- une deuxième couche 5 d'adaptation est déposée sur la deuxième pièce 2 à des fins de coopération avec la première couche en permettant d'agir comme catalyseur de l'oxyde formé par friction avec la première couche.

Il pourrait être possible également de déposer la couche 5 sur la première pièce 1 et la couche 4 sur la deuxième pièce 2.

Cette dernière fonction permet d'étendre la stabilité de l'oxyde et d'assurer la fonction lubrification sur un domaine de haute température plus large de 300°C à 650°C.

La première couche 4 déposée sur ladite première pièce 1 possède une résistance accrue à l'oxydation à chaud et permet d'obtenir une couche de type glaze layer stable et un coefficient de frottement stable et sans période de rodage pour un domaine de haute température et en particulier de 300°C à 650°.

Elle présente une dureté inférieure à celle de la première pièce 1.

La deuxième couche d'adaptation 5 coopérant avec ladite première couche 4 et déposée sur ladite deuxième pièce 2 offre une dureté supérieure à celle de ladite première couche 4. Elle présente selon une forme de réalisation particulière une dureté superficielle supérieure à 800HV sur les cinq premiers micromètres dans la profondeur du matériau. Elle présente dans ce cas une profondeur de diffusion de 10 à 15 micromètres. Selon une forme de réalisation, la deuxième couche d'adaptation présente une dureté superficielle supérieure à 850HV.

La première couche 4 a une capacité à la déformation élasto-plastique apte à réduire, au sein de ladite interface, les pressions de contacts et les contraintes de cisaillements générée par la friction entre les deux pièces.

La première couche 4 comportant une morphologie microporeuse, conférant à ladite première couche la fonction d'adaptation de propriétés élasto-plastiques par un mécanisme compaction des porosités.

Selon une forme de réalisation, la première couche d'adaptation a une densité globale de micropores comprise entre 2% et 30%, ce qui confère à ladite interface une capacité de déformation plastique car les micropores se compactent sous l'effet de contraintes locales et homogénéisent le champ de pression de contact.

La couche d'adaptation peut présenter une épaisseur variable. Elle s'avère optimale d'un point de vue encombrement, poids et efficacité lorsqu'elle est comprise entre 50 micromètres et 200 micromètres après rectification du revêtement réalisé comme il sera vu plus loin.

La première couche d'adaptation a une capacité à déformation plastique de de 80 GPa (Giga-pascal) en module de Young. Cette propriété confère à ladite interface une meilleure capacité à déformation élastique.

Selon une forme de réalisation, la première couche d'adaptation est une couche d'alliage de cobalt dont la teneur en cobalt est d'au moins 40 %.

Selon une autre forme de réalisation, la première couche d'adaptation est un alliage de cobalt, de molybdène, de chrome et de silicium. Selon une forme particulière dont les résultats d'essai sont représentés sur les figures 4 et 5, la teneur en cobalt est 51 % à ±1%, la teneur en molybdène 28% à ±1%, la teneur en chrome 17% à ±1% et la teneur en silicium 4% à ±1%.

La figure 3 montre que le grippage est évité mais que le coefficient de frottement µ est d'environ 0.6. De plus, en fin d'essai, il en ressort une usure du revêtement CoCrMoSi sur 16 µm de profondeur visible sur la figure 4. Ainsi, le grippage est évité avec ce couple de matériau (la liaison mécanique ne sera pas bloquée) mais les conditions de glissement restent à améliorer car le coefficient de frottement dépasse 0.5.

Selon une autre forme de réalisation, la première couche a été soumise à une préoxydation à une température comprise entre 525°C et 650°C. Toujours dans la même forme de réalisation, la deuxième couche d'adaptation a fait l'objet d'une diffusion d'atome de carbone obtenue par traitement thermochimique de diffusion tel que la cémentation ou la nitrocarburation. A titre illustratif, le procédé de carburation KOLSTERISING (marque déposée par la société BODYCOTE) permet une diffusion homogène du carbone en surface de l'alliage de nickel. Le THERMI-SP (marque déposée par la société Thermi-Lyon) produit une nitrocarburation et est équivalente au précédent procédé pour obtenir la performance visée.

Dans ce cas, en plus de l'absence de grippage, comme le montre la figure 3, le coefficient de frottement est d'environ 0,45, constant et faible à une haute température. Il en résulte ainsi une solution optimale du point de vue de l'usure (extrêmement limitée comme le montre la figure 4) et la fonction de glissement est assurée avec un coefficient de frottement satisfaisant.

Dans certaines formes de réalisation, ladite première couche d'adaptation comporte une épaisseur supérieure à 150 micromètres.

Il est possible de prévoir une couche d'adaptation de dureté ayant un coefficient de dureté supérieur à celui de ladite deuxième pièce qui est interposée entre ladite deuxième pièce et ladite deuxième couche d'adaptation, ladite couche étant destinée à introduire un gradient de dureté entre ladite deuxième pièce et ladite deuxième couche d'adaptation correspondante.

Selon certaines formes de réalisation, ladite seconde couche d'adaptation de dureté a une épaisseur comprise entre 5 µm et 15 µm.

Les procédés permettant d'obtenir les couches 4 et 5 d'adaptation de l'interface sont décrits dans ce qui suit.

La première couche d'adaptation 4 est déposée par un procédé par projection thermique permettant un dépôt relativement épais et avec une vitesse de dépôt relativement élevée. Ce dépôt comprend les étapes suivantes :
- la surface du substrat est soumise à un prétraitement de telle sorte que l'adhérence entre le substrat et la première couche d'adaptation résiste à un effort de traction au moins égale à 20 MPa,
- la couche est formée à partir d'une succession de passages de projections de particules métalliques à l'état fondu sur la surface du substrat, ladite couche étant un empilement de lamelles, chaque lamelle ayant une épaisseur minimale de 15 µm.

Une rectification du revêtement est réalisée pour obtenir la cote finale.

Le prétraitement est une opération permettant de rendre la surface rugueuse ce qui permet une accroche mécanique solide. Il peut s'agir par exemple d'un prétraitement par sablage.

Selon la forme de réalisation dans laquelle la première couche est préoxydée, une oxydation post-projection est réalisée à température de 525°C pendant 22 heures sous atmosphère composée d'oxygène (air).

L'évolution progressive de densité de micropores est obtenue en faisant varier la vitesse du dépôt entre deux passages de projection.

Les conditions du dépôt doivent permettre d'obtenir une première couche d'adaptation 4 présentant une dureté moyenne comprise entre 400 Hv et 500 Hv.

Après l'essai de flexion, aucune fissure ne doit apparaître dans la couche d'adaptation 4.

La deuxième couche d'adaptation 5 est obtenue par un procédé de traitement thermochimique de diffusion de carbone en surface des pièces pour former une couche mince dure et lubrifiante.

L'interface proposée par l'invention est particulièrement adaptée à un dispositif d'articulation qui est constitué de deux pièces en mouvement relatif l'une contre l'autre, correspondant respectivement à une noix et une partie concave dans laquelle vient se loger la noix. La partie concave correspond à la piste ayant une grande longueur cinématique et la noix au pion ayant une petite longueur cinématique. La première couche d'adaptation 4 de l'interface est appliquée sur la petite longueur cinématique et la deuxième couche d'adaptation 5 sur la grande longueur cinématique. Comme vu précédemment l'inverse est également possible.

## Revendications

1. Interface d'adaptation interposée entre une première pièce (1) en nickel ou en alliage de nickel ou en alliage de cobalt chrome en mouvement relatif avec une deuxième pièce (2) en nickel ou en alliage de nickel ou en alliage de cobalt chrome, **caractérisée en ce que** ladite interface comporte deux couches d'adaptation,
- une première couche (4) d'adaptation est déposée sur une des deux pièces (1, 2) et présente une constitution permettant avec le frottement avec l'autre pièce de créer une couche de type glaze layer ;
- une deuxième couche (5) d'adaptation est déposée sur la deuxième pièce (1, 2) à des fins de coopération avec la première couche permettant d'agir comme catalyseur de l'oxyde formé par friction avec la première couche.

2. Interface selon la revendication 1, **caractérisée en ce que** ladite première couche d'adaptation (4) est une couche d'alliage de cobalt dont la teneur en cobalt est d'au moins 40%.

3. Interface selon l'une quelconque des revendications 1 à 2, **caractérisée en ce que** ladite première couche d'adaptation (1) est un alliage de cobalt, chrome molybdène et silicium.

4. Interface selon la revendication 3, **caractérisée en ce que** la teneur en cobalt est de 51%±1%, la teneur en molybdène de 28%±1%, la teneur en chrome de 17%±1% et la teneur en silicium de 4%±1% dans l'alliage de cobalt, chrome, molybdène et silicium de la couche (1).

5. Interface selon l'une quelconque des revendications 1 à 4, **caractérisée en ce que** ladite première couche (4) est pré-oxydée à température minimum de 525 °C et maximum de 650°C avant d'être soumise à la friction.

6. Interface selon l'une quelconque des revendications 1 à 5, **caractérisée en ce que** ladite première couche (4) possède une dureté inférieure à celle de ladite première pièce, ladite première couche (4) comportant une morphologie microporeuse, conférant à ladite première couche (4) une fonction d'adaptation de propriétés élasto-plastiques par un mécanisme de compaction des porosités.

7. Interface selon les revendications 1 à 6, **caractérisée en ce que** ladite première couche (4) a une densité globale de micropores comprise entre 2% et 30%.

8. Interface selon les revendications 1 à 7, **caractérisée en ce que** ladite première couche (4) a une épaisseur comprise entre 50µm et 200µm après rectification.

9. Interface selon les revendications 1 à 8, **caractérisée en ce que** ladite première couche (4) a une capacité à déformation élastique de 80 GPa en module de Young.

10. Interface selon la revendication 1, **caractérisé en ce que** la deuxième couche est réalisé par traitement thermochimique de diffusion de carbone en surface de la pièce (1,2).

11. Interface selon la revendication 10, **caractérisé en ce que** la surface traitée est en inconel 718.

12. Interface selon l'une des revendications 10 ou 11, **caractérisée en ce que** ladite deuxième couche d'adaptation (5) comporte une dureté superficielle supérieure à 850 HV.

13. Interface selon l'une des revendication 10 à 12, **caractérisée en ce que** ladite deuxième couche d'adaptation (5) a une profondeur de diffusion (épaisseur de traitement) de 10 à 15 µm et une dureté supérieure à 800 HV sur les 5 premiers µm dans la profondeur du matériau.

14. Procédé de dépôt de la première couche d'adaptation (4) sur une pièce en nickel ou en alliage de nickel ou alliage de cobalt chrome selon l'une quelconque des revendications 1 à 9, **caractérisé en ce que** ledit procédé de dépôt est un procédé de dépôt de revêtement par projection thermique comprenant les étapes suivantes :
- la surface de la pièce est soumise à un prétraitement de telle sorte que l'adhérence entre la pièce et la première couche d'adaptation résiste à un effort de traction au moins égal à 35 Mpa,
- la couche de dépôt est formée à partir d'une succession de passages de projections de particules métalliques à l'état fondu sur la surface de la pièce, ladite couche étant un empilement de lamelles, chaque lamelle ayant une épaisseur minimale de 15µm.

15. Procédé selon la revendication 14, **caractérisé en ce qu'**une rectification du revêtement est réalisée pour obtenir la cote finale.

16. Procédé selon l'une des revendications 14 ou 15, **caractérisé en ce qu'**une oxydation post-projection est réalisée à température de 525°C pendant 22 heures sous atmosphère composée d'oxygène.

17. Procédé de dépôt de la deuxième couche d'adaptation (5) sur une pièce en nickel ou en alliage de nickel ou alliage de cobalt chrome selon l'une des revendications 1, 10 à 13, **caractérisé en ce que** ledit procédé de dépôt est composé d'un procédé de traitement thermochimique de diffusion de carbone en surface de ladite pièce.

18. Dispositif d'articulation comprenant une interface d'adaptation selon l'une quelconque des revendications 1 à 13, ladite interface étant interposée entre une première pièce de petite longueur cinématique (1) et une deuxième pièce de grande longueur cinématique (2) constituant le dispositif, la première couche d'adaptation (4) de l'interface étant appliquée sur la petite longueur cinématique et la deuxième couche d'adaptation (5) de l'interface étant appliquée sur la grande longueur cinématique.

## Patentansprüche

1. Schnittstelle zur Anpassung zwischen einem ersten Teil (1) aus Nickel oder Nickellegierung oder Kobaltchromlegierung in relativer Bewegung mit einem zweiten Teil (2) aus Nickel oder Nickellegierung oder Kobaltchromlegierung, **dadurch gekennzeichnet, dass** die Schnittstelle zwei Anpassungsschichten aufweist,
- eine erste Anpassungsschicht (4) ist auf einem der zwei Teile (1, 2) aufgetragen und weist eine Beschaffenheit auf, die mit dem Reiben mit dem anderen Teil ermöglicht, eine Schicht des Typs der Glasurschicht zu bilden;
- eine zweite Anpassungsschicht (5) ist zum Zwecke des Zusammenwirkens mit der ersten Schicht auf dem zweiten Teil (1, 2) aufgetragen, die ermöglicht, als Katalysator des Oxids zu wirken, das durch Reibung mit der ersten Schicht gebildet wird.

2. Schnittstelle nach Anspruch 1, **dadurch gekennzeichnet, dass** die erste Anpassungsschicht (4) eine Schicht aus Kobaltlegierung ist, deren Kobaltgehalt mindestens 40 % beträgt.

3. Schnittstelle nach einem der Ansprüche 1 bis 2, **dadurch gekennzeichnet, dass** die erste Anpassungsschicht (1) eine Legierung aus Kobalt, Chrom, Molybdän und Silizium ist.

4. Schnittstelle nach Anspruch 3, **dadurch gekennzeichnet, dass** der Kobaltgehalt 51 % ± 1 %, der Molybdängehalt 28 % ± 1 %, der Chromgehalt 17 % ± 1 % und der Siliziumgehalt 4 % ± 1 % in der Legierung aus Kobalt, Chrom, Molybdän und Silizium der Schicht (1) beträgt.

5. Schnittstelle nach einem der Ansprüche 1 bis 4, **dadurch gekennzeichnet, dass** die erste Schicht (4) bei einer Mindesttemperatur von 525 °C und Maximaltemperatur von 650 °C voroxidiert ist, bevor sie der Reibung unterworfen wird.

6. Schnittstelle nach einem der Ansprüche 1 bis 5, **dadurch gekennzeichnet, dass** die erste Schicht (4) eine geringere Härte als jene des ersten Teils aufweist, wobei die erste Schicht (4) eine mikroporöse Morphologie aufweist, die der ersten Schicht (4) eine Anpassungsfunktion von elastischplastischen Eigenschaften durch einen Verdichtungsmechanismus der Porositäten verleiht.

7. Schnittstelle nach den Ansprüchen 1 bis 6, **dadurch gekennzeichnet, dass** die erste Schicht (4) eine Gesamtdichte von Mikroporen aufweist, die zwischen 2 % und 30 % beträgt.

8. Schnittstelle nach den Ansprüchen 1 bis 7, **dadurch gekennzeichnet, dass** die erste Schicht (4) eine Dicke aufweist, die zwischen 50 µm und 200 µm nach dem Schleifen beträgt.

9. Schnittstelle nach den Ansprüchen 1 bis 8, **dadurch gekennzeichnet, dass** die erste Schicht (4) eine elastische Verformungsfähigkeit mit einem Young'schen Modul von 80 GPa aufweist.

10. Schnittstelle nach Anspruch 1, **dadurch gekennzeichnet, dass** die zweite Schicht durch thermochemische Behandlung der Diffusion von Kohlenstoff auf der Oberfläche des Teils (1, 2) hergestellt ist.

11. Schnittstelle nach Anspruch 10, **dadurch gekennzeichnet, dass** die behandelte Oberfläche aus Inconel 718 ist.

12. Schnittstelle nach einem der Ansprüche 10 oder 11, **dadurch gekennzeichnet, dass** die zweite Anpassungsschicht (5) eine Oberflächenhärte von über 850 HV aufweist.

13. Schnittstelle nach einem der Ansprüche 10 bis 12, **dadurch gekennzeichnet, dass** die zweite Anpassungsschicht (5) eine Diffusionstiefe (Behandlungsdicke) von 10 bis 15 µm und eine Oberflächenhärte von über 800 HV über die 5 ersten µm in der Tiefe des Materials aufweist.

14. Verfahren zum Aufbringen der ersten Anpassungsschicht (4) auf einem Teil aus Nickel oder Nickellegierung oder Kobaltchromlegierung nach einem der Ansprüche 1 bis 9, **dadurch gekennzeichnet, dass** das Verfahren zum Aufbringen ein Verfahren zum Beschichtungsaufbringen durch thermisches Spritzen ist, das die folgenden Schritte aufweist:
- die Oberfläche des Teils wird derart einer Vorbehandlung unterworfen, dass die Haftung zwischen dem Teil und der ersten Anpassungsschicht einer Zugspannung von mindestens gleich 35 Mpa standhält,
- die Aufbringungsschicht wird aus einer Abfolge von Spritzdurchgängen von Metallpartikeln im geschmolzenen Zustand auf die Oberfläche des Teils gebildet, wobei die Schicht ein Stapel von Lamellen ist, wobei jede Lamelle eine minimale Dicke von 15 µm aufweist.

15. Verfahren nach Anspruch 14, **dadurch gekennzeichnet, dass** ein Schleifen der Beschichtung durchgeführt wird, um das Fertigmaß zu erhalten.

16. Verfahren nach einem der Ansprüche 14 oder 15, **dadurch gekennzeichnet, dass** eine Oxidation nach dem Spritzen bei einer Temperatur von 525 °C 22 Stunden lang in einer Atmosphäre, die aus Sauerstoff besteht, durchgeführt wird.

17. Verfahren zum Aufbringen der ersten Anpassungsschicht (5) auf einem Teil aus Nickel oder Nickellegierung oder Kobaltchromlegierung nach einem der Ansprüche 1, 10 bis 13, **dadurch gekennzeichnet, dass** das Verfahren zum Aufbringen aus einem Verfahren der thermochemischen Behandlung der Diffusion von Kohlenstoff auf der Oberfläche des Teils besteht.

18. Gelenkvorrichtung, umfassend eine Schnittstelle zur Anpassung nach einem der Ansprüche 1 bis 13, wobei die Schnittstelle zwischen einem ersten Teil von kleiner kinematischer Länge (1) und einem zweiten Teil von großer kinematischer Länge (2), das die Vorrichtung bildet, angeordnet ist, wobei die erste Anpassungsschicht (4) der Schnittstelle auf der kleinen kinematischen Länge aufgebracht ist und wobei die zweite Anpassungsschicht (5) der Schnittstelle auf der großen kinematischen Länge aufgebracht ist.

## Claims

1. Adjustment interface inserted between a first part (1) made of nickel or made of nickel alloy or made of cobalt-chromium alloy that is in relative motion with a second part (2) made of nickel or made of nickel alloy or made of cobalt-chromium alloy, **characterized in that** said interface comprises two adjustment layers,
- a first adjustment layer (4) is deposited on one of the two parts (1, 2) and has a composition that makes it possible, with the friction with the other part, to create a glaze-type layer;
- a second adjustment layer (5) is deposited on the second part (1, 2) for the purposes of cooperation with the first layer by making it possible to act as a catalyst for the oxide formed by friction with the first layer.

2. Interface according to claim 1, **characterized in that** said first adjustment layer (4) is a layer of cobalt alloy, the cobalt content of which is at least 40%.

3. Interface according to either one of claims 1 and 2, **characterized in that** said first adjustment layer (1) is an alloy of cobalt, chromium, molybdenum and silicon.

4. Interface according to claim 3, **characterized in that** the cobalt content is 51% ± 1%, the molybdenum content is 28% ± 1%, the chromium content is 17% ± 1% and the silicon content is 4% ± 1% in the alloy of cobalt, chromium, molybdenum and silicon of the layer (1).

5. The interface as claimed in any one of claims 1 to 4, **characterized in that** said first layer (4) is pre-oxidized at a minimum temperature of 525°C and a maximum temperature of 650°C before being subjected to friction.

6. Interface according to any one of claims 1 to 5, **characterized in that** said first layer (4) has a hardness lower than that of said first part, said first layer (4) having a microporous morphology, giving said first layer (4) a role of adapting the elasto-plastic properties via a porosity compaction mechanism.

7. Interface according to claims 1 to 6, **characterized in that** said first layer (4) has an overall density of micropores of between 2% and 30%.

8. Interface according to claims 1 to 7, **characterized in that** said first layer (4) has a thickness of between 50 µm and 200 µm after grinding.

9. Interface according to claims 1 to 8, **characterized in that** said first layer (4) has an elastic deformability of 80 GPa as Young's modulus.

10. Interface according to claim 1, **characterized in that** the second layer is produced by thermochemical carbon diffusion treatment at the surface of the part (1, 2).

11. Interface according to claim 10, **characterized in that** the surface treated is made of Inconel 718.

12. Interface according to either of claims 10 and 11, **characterized in that** said second adjustment layer (5) has a surface hardness of greater than 850 HV.

13. Interface according to one of claims 10 to 12, **characterized in that** said second adjustment layer (5) has a diffusion depth (treatment thickness) of from 10 to 15 µm and a hardness of greater than 800 HV over the first 5 µm in the depth of the material.

14. Process for depositing the first adjustment layer (4) on a part made of nickel or made of nickel alloy or cobalt-chromium alloy according to any one of claims 1 to 9, **characterized in that** said deposition process is a thermal spray coating deposition process comprising the following steps:
- the surface of the part is subjected to a pretreatment in such a way that the adhesion between the part and the first adjustment layer withstands a tensile stress at least equal to 35 MPa,
- the deposited layer is formed from a succession of passes of sprayings of metal particles in the molten state onto the surface of the part, said layer being a stack of lamellae, each lamella having a minimum thickness of 15 µm.

15. Process according to claim 14, **characterized in that** a grinding of the coating is carried out in order to obtain the final dimension.

16. Process according to either of claims 14 and 15, **characterized in that** a post-spraying oxidation is carried out at a temperature of 525°C for 22 hours in an atmosphere composed of oxygen.

17. Process for depositing the second adjustment layer (5) on a part made of nickel or made of nickel alloy or cobalt-chromium alloy according to any one of claims 1 and 10 to 13, **characterized in that** said deposition process is composed of a process of thermochemical carbon diffusion treatment at the surface of said part.

18. Articulation device comprising an adjustment interface according to any one of claims 1 to 13, said interface being inserted between a first part of small kinematic length (1) and a second part of large kinematic length (2) constituting the device, the first adjustment layer (4) of the interface being applied to the small kinematic length and the second adjustment layer (5) of the interface being applied to the large kinematic length.
